(19)

Europäisches
Patentamt
European
Patent Office
Office européen
des brevets

(11) **EP 3 910 948 A1**

(12) **EUROPEAN PATENT APPLICATION**
published in accordance with Art. 153(4) EPC

(43) Date of publication:
**17.11.2021 Bulletin 2021/46**

(21) Application number: **19910303.7**

(22) Date of filing: **16.05.2019**

(51) Int Cl.:
**H04N 19/132** (2014.01)

(86) International application number:
**PCT/CN2019/087300**

(87) International publication number:
**WO 2020/147226 (23.07.2020 Gazette 2020/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.01.2019 US 201962793012 P**

(71) Applicant: **GUANGDONG OPPO MOBILE
TELECOMMUNICATIONS
CORP., LTD.
Dongguan, Guangdong 523860 (CN)**

(72) Inventors:
• **MA, Yanzhuo**
  **Dongguan, Guangdong 523860 (CN)**
• **HUO, Junyan**
  **Dongguan, Guangdong 523860 (CN)**
• **WAN, Shuai**
  **Dongguan, Guangdong 523860 (CN)**

(74) Representative: **Taor, Simon Edward William et al
Venner Shipley LLP
200 Aldersgate
London EC1A 4HD (GB)**

(54) **INFORMATION PROCESSING METHOD AND APPARATUS, AND DEVICE AND STORAGE MEDIUM**

(57) Disclosed in embodiments of the present application are an information processing method and apparatus, and a device and a storage medium. The method comprises: determining an original pixel set of a block to be encoded in the current video frame; determining attribute information of each original pixel in the original pixel set; selecting original pixels, the attribute information of which satisfies a screening condition, to obtain a target pixel set; and encoding said block on the basis of the attribute information of each original pixel in the target pixel set.

```
┌──────────────────────────────────────────────────────────────────┐
│  An original sample set of a block to be encoded in a current      │   S301
│  video picture is determined                                       │
└──────────────────────────────────────────────────────────────────┘
                                  │
                                  ▼
┌──────────────────────────────────────────────────────────────────┐
│  Attribute information of each sample pixel in the original         │   S302
│  sample set is determined                                          │
└──────────────────────────────────────────────────────────────────┘
                                  │
                                  ▼
┌──────────────────────────────────────────────────────────────────┐
│  The original sample, attribute information of which meets a        │   S303
│  screening condition, is selected to obtain a target sample set     │
└──────────────────────────────────────────────────────────────────┘
                                  │
                                  ▼
┌──────────────────────────────────────────────────────────────────┐
│  Encoding processing is performed on the block to be encoded based  │   S304
│  on the attribute information of each original sample in the target  │
│  sample set                                                         │
└──────────────────────────────────────────────────────────────────┘
```

**FIG. 3A**

**EP 3 910 948 A1**

**Description**

TECHNICAL FIELD

The embodiments of the present disclosure relate to video encoding and decoding technology, and relate to but are not limited to a method, apparatus and device for processing information, and a storage medium.

BACKGROUND

In recent years, video services have developed rapidly in internet and mobile communications fields. The video services need to encode source video data firstly, and then transmit the encoded video data to the user terminal through a channel of the internet or mobile communication network.
Fluidity of the video directly affects video viewing experiences of the user, and computational complexity of prediction encoding in video encoding directly affects the fluidity of the video.

SUMMARY

In view of this, the embodiments of the present disclosure provide a method, an apparatus and a device for processing information and a storage medium, to solve at least one problem in the related art.
The technical solutions of the embodiments of the present disclosure are implemented in the following manners.
A first aspect of the embodiments of the present disclosure provides a method for processing information, which includes operations as follows. An original sample set of a block to be encoded in a current video picture is determined. Attribute information of each original sample in the original sample set is determined.
The original sample, attribute information of which meets a screening condition, is selected to obtain a target sample set, and encoding processes is performed on the block to be encoded based on the attribute information of each original sample in the target sample set.
A second aspect of the embodiments of the present disclosure provides a device for processing information, which includes an original sample set determining module, an attribute information determining module, a target sample selecting module and an encoding processing module. The original sample set determining module is configured to determine an original sample set of a block to be encoded in a current video picture. The attribute information determining module is configured to determine attribute information of each original sample in the original sample set. The target sample selecting module is configured to select the original sample, attribute information of which meets a screening condition, to obtain a target sample set. The encoding processing module is configured to preform encoding processes on the block to be encoded based on the attribute information of each original sample in the target sample set.
A third aspect of the embodiments of the present disclosure provides an electronic device, which includes a memory and a processor. The memory is configured to store a computer program capable of running on the processor, and the processor, when executing the program, implements the operations of the above processing information.
A fourth aspect of the embodiments of the present disclosure provides a computer-readable storage medium on which a computer program is stored, and the computer program, when executed by a processor, implements the operations in the above method for processing information.
In the embodiments of the present disclosure, the original sample attribute information of which meets the screening condition, is selected from the original sample set of the block to be encoded, to obtain the target sample set. Encoding processing is performed on the block to be encoded based on the attribute information of each original sample in the target sample set. In this way, encoding processing is performed on the block to be encoded based on the attribute information of the selected part of the original samples (that is, the original samples in the target sample set), rather than attribute information of all the original samples in the original sample set, which can reduce computational complexity of encoding processing, thereby improving video encoding efficiency, and improving fluidity of video viewing of the users.

BRIEF DESCRIPTION OF THE DRAWINGS

FIG. 1 is a schematic diagram of a composition structure of video codec network architecture according to an embodiment of the present disclosure;

FIG. 2A is a schematic diagram of a composition structure of a video encoder according to an embodiment of the present disclosure;

FIG. 2B is a schematic diagram of a composition structure of a video decoder according to an embodiment of the present disclosure;

FIG. 3A is a schematic diagram of an implementation flow of a method for processing information according to an embodiment of the present disclosure;

FIG. 3B is a schematic diagram of an implementation flow of another method for processing information according to an embodiment of the present disclosure;

FIG. 3C is a schematic diagram of the relationship between a block to be encoded and reference samples according to an embodiment of the present disclosure;

FIG. 3D is a schematic diagram of an implementation flow of another method for processing information according to an embodiment of the present disclosure;

FIG. 4 is a schematic diagram of an implementation flow of another method for processing information according to an embodiment of the present disclosure;

FIG. 5A is a schematic diagram of an implementation flow of another method for processing information according to an embodiment of the present disclosure;

FIG. 5B is a schematic diagram of an implementation process of a method for constructing a prediction model according to an embodiment of the present disclosure;

FIG. 6A is a schematic diagram of a composition structure of a device for processing information according to an embodiment of the present disclosure;

FIG. 6B is a schematic diagram of a composition structure of another device for processing information according to an embodiment of the present disclosure;

FIG. 6C is a schematic diagram of a composition structure of another device for processing information according to an embodiment of the present disclosure;

FIG. 6D is a schematic diagram of a composition structure of another device for processing information according to an embodiment of the present disclosure;

FIG. 7 is a schematic diagram of a hardware entity of an electronic device according to an embodiment of the present disclosure.

## DETAILED DESCRIPTION

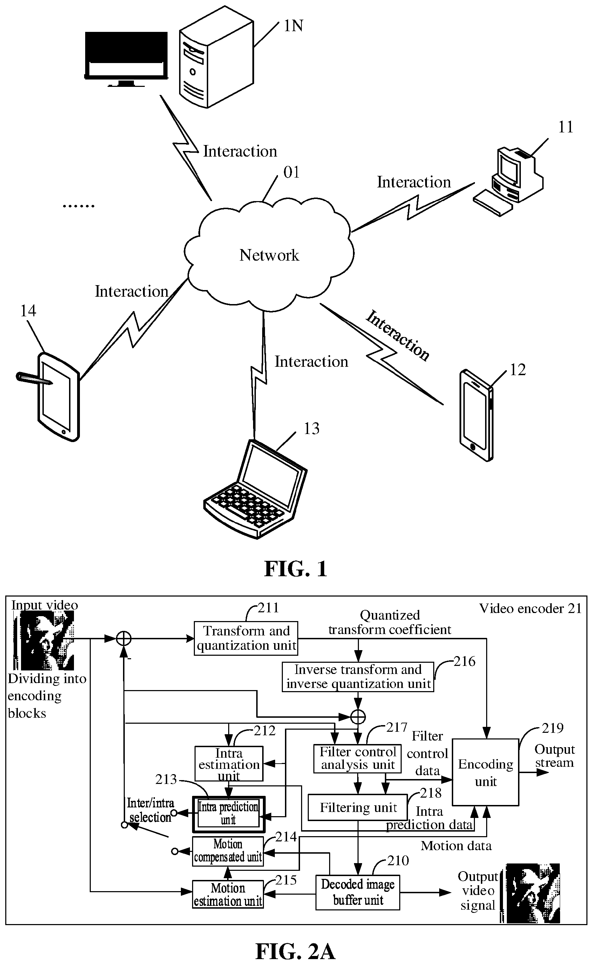

The embodiments first provide video codec network architecture. FIG. 1 is a schematic diagram of a composition structure of the video codec network architecture of an embodiment of the present disclosure. As shown in FIG. 1, the network architecture includes one or more electronic devices 11 to 1N and a communication network 01. The electronic devices 11 to 1N can perform video interaction through the communication network 01. The electronic devices may be various types of devices having video codec functions during implementation. For example, the electronic devices may include a mobile phone, a tablet, a personal computer, a personal digital assistant, a navigator, a digital phone, a video phone, a television, sensor equipment, servers, and the like.

The electronic devices have video codec functions, and generally include a video encoder and a video decoder. For example, as shown in FIG. 2A, the composition structure of the video encoder 21 includes a transform and quantization unit 211, an intra estimation unit 212, and an intra prediction unit 213, a motion compensated unit 214, a motion estimation unit 215, an inverse transform and inverse quantization unit 216, a filter control analysis unit 217, a filtering unit 218, an encoding unit 219, a decoded image buffer unit 210 and the like. The filtering unit 218 can implement deblocking filtering and sample adaptive offset (SAO) filtering, and the encoding unit 219 can implement header information encoding and context-based adaptive binary arithmatic coding (CABAC). A block to be encoded of the current video picture is obtained by dividing the inputted source video data through a coding tree unit (CTU), and then intra prediction or inter prediction is performed on the block to be encoded to obtain residual information. The obtained residual information is transformed by the transform and quantization unit 211, and the transforming includes transforming the residual information from a sample domain to a transform domain and quantifying an obtained transform coefficient, to further reduce a bit rate. The intra estimation unit 212 and the intra prediction unit 213 are configured to perform intra prediction on the block to be encoded, for example, determining an intra prediction mode used to code the block to be encoded. The motion compensated unit 214 and the motion estimation unit 215 are configured to perform inter prediction encoding on the one or more blocks of the block to be encoded in relative to one or more reference pictures to provide temporal prediction information. The motion estimation unit 215 is used to estimate a motion vector, which can estimate the motion of the block to be encoded. The motion compensated unit 214 performs motion compensated based on the motion vector. After the intra prediction mode is determined, the intra prediction unit 213 is also used to provide the selected intra prediction data to the encoding unit 219, and the motion estimation unit 215 also sends the calculated and determined motion vector data to the encoding unit 219. In addition, the inverse transform and inverse quantization unit 216 is used to reconstruct the block to be encoded, and reconstruct the residual block in the sample domain. The block effect artifacts are removed from the reconstructed residual block through the filter control analysis unit 217 and the filtering unit 218, and then the reconstructed residual block is added to a prediction block in the picture of the decoded image buffer unit 210 to generate reconstructed video encoding blocks. The encoding unit 219 is configured to encode various encoding parameters and quantized transform coefficients. In the CABAC-based encoding algorithm, context content can be based on neighbouring encoding blocks, and can be used to encode information indicating the determined intra prediction mode, and output the bitstream of the video data. The decoded image buffer unit 210 is used to store reconstructed video encoding blocks for prediction reference. As the video encoding progresses, new reconstructed video encoding blocks are continuously generated, and these reconstructed video encoding blocks are stored in the decoded image buffer unit 210.

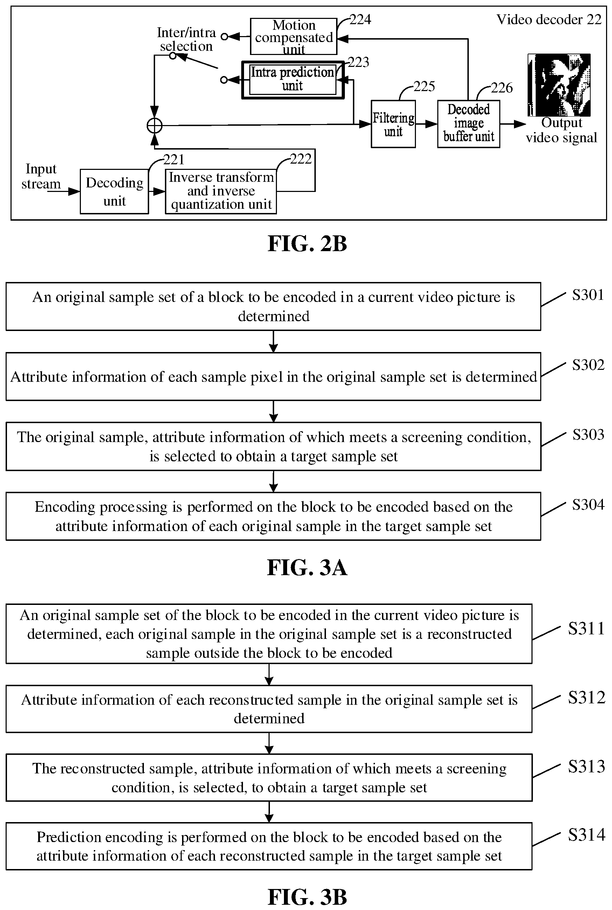

A composition structure of the video decoder 22 corresponding to the video encoder 21 is as shown in FIG. 2B. The video decoder includes: a decoding unit 221, an inverse transform and inverse quantization unit 222, an intra prediction unit 223, a motion compensated unit 224, a filtering unit 225, and a decoded image buffer unit 226, and the like. The decoding unit 221 can implement header information decoding and CABAC decoding, and the filtering unit 225 can implement deblocking filtering and SAO filtering. After encoding processing as shown in FIG. 2A is performed on the inputted video signal, a bitstream of the video signal is outputted. After the bitstream is inputted to the video decoder 22, the bitstream flows through the decoding unit 221 to obtain the decoded transform coefficients. The transform coefficients are processed by the inverse transform and inverse quantization unit 222 to generate residual blocks in the sample domain. The intra prediction unit 223 may be configured to generate prediction data of the current decoded block based on the determined intra prediction mode and data from the previous decoded block of the current frame or picture. The motion compensated unit 224 determines prediction information of the currently decoded block by parsing the motion vector and other associated syntax elements, and uses the prediction information to generate a prediction block of the current decoded block being decoded. A decoded video block is formed by summing the residual block from the inverse transform and inverse quantization unit 222 and the corresponding prediction block generated by the intra prediction unit 223 or the motion compensated unit 224. The decoded video block passes through the filtering unit 225 to remove block effect artifacts, thereby improving video quality. Then the decoded video block is stored in the decoded image buffer unit 226, and the decoded image buffer unit 226 stores the reference image for subsequent intra prediction or motion compensated, and is also used for outputting and displaying of the video signal.

Based on this, the technical solutions of the present disclosure are further described in detail below with reference to the drawings and embodiments. The method for processing information provided in the embodiments of the present disclosure may be applied to the video encoder 21, and may also be applied to the video decoder 22, which is not limited in the embodiments of the present disclosure.

The embodiments of the present disclosure provide a method for processing information, which is applied to an electronic device. The functions implemented by the method may be implemented by calling program codes through a processor in the electronic device. Of course, the program codes may be stored in a computer storage medium. The electronic device includes at least a processor and a storage medium

FIG. 3A is a schematic diagram of an implementation flow of a method for processing information according to an embodiment of the present disclosure. As shown in FIG. 3A, the method includes operations S301 to S304.

In operation S301, an original sample set of a block to be encoded in a current video picture is determined.

It should be noted that the block to be encoded refers to an image area on which encoding processing is to be performed in the current video picture. Different encoding processes correspond to different types of the block to be encoded, and correspond to different contents contained in the original sample set. For example, in a case that the encoding processing is prediction encoding, the block to be encoded is an image block including a luma component and a chrominance component, and reconstructed samples outside the block to be encoded may be determined as the original sample set, that is, reference samples used when prediction encoding is performed on the block to be encoded, but the content of the original sample set is only exemplary herein and not limited. In a case that the encoding processing is transform encoding, the block to be encoded is an image block including residual values, that is, a residual block outputted after prediction encoding is performed. A sample in the residual block may be determined as the original sample set, but the content of the original sample set is only exemplary herein and not limited. In a case that the encoding processing is entropy encoding, the block to be encoded is an image block including transform coefficients, that is, a coefficient block outputted after transform encoding is performed. A sample in the coefficient block may be determined as the original sample set, but the content of the original sample set is only exemplary herein and not limited.

In operation S302, attribute information of each original sample in the original sample set is determined.

It should be understood that in a case that the original sample set includes a reconstructed sample outside the block to be encoded, the attribute information of each original sample in the original sample set is position information, a luma component, a chrominance component or the like of the reconstructed sample. In a case that the original sample set includes a sample in the residual block, the attribute information of each original sample in the original sample set is position information, a residual value or the like of the sample in the residual block. In a case that the original sample set includes samples in the coefficient block, the attribute information of each original sample in the original sample set is position information, transform coefficients or the like of a part of samples in the coefficient block.

In operation S303, the original sample, attribute information of which meets the screening condition, is selected to obtain a target sample set.

In operation S304, encoding processing is performed on the block to be encoded based on the attribute information of each original sample in the target sample set.

It should be noted that the type of the encoding processing is not limited here. For example, the encoding processing may be one of prediction encoding, transform encoding, and entropy encoding.

In the embodiment of the present disclosure, before encoding processing is performed on the block to be encoded, a part (that is, the target sample set) of original samples are selected from the original sample set of the block to be encoded, and then encoding processing is performed on the block to be encoded based on the attribute information of the part of original samples (rather than all the original samples in the original sample set), thereby reducing complexity of the encoding process, decreasing time spent in the encoding process, and further improving fluidity of video viewing of the users.

It should be noted that the method for processing information provided in the embodiment of the present disclosure is actually an improvement on the traditional video encoding technology (such as the video coding standard H.264, H.265, etc.). That is, a concept of a subset is added based on the traditional video encoding technology. For example, before prediction encoding is performed on the block to be encoded, a part (that is, a subset is selected) of original samples is selected from the original sample set (including all reconstructed samples adjacent to the block to be encoded), and then down-sampling or filtering processing is performed on the part of original samples, instead of performing down-sampling or filtering processing on the original sample set, thereby reducing complexity of prediction encoding and improving encoding efficiency.

The embodiment of the present disclosure provides another method for processing information. FIG. 3B is a schematic diagram of an implementation flow of another method for processing information according to the embodiment of the present disclosure. As shown in FIG. 3B, the method includes operations S311 to S314.

In operation S311, an original sample set of a block to be encoded in the current video picture is determined, and each original sample in the original sample set is a reconstructed sample outside the block to be encoded.

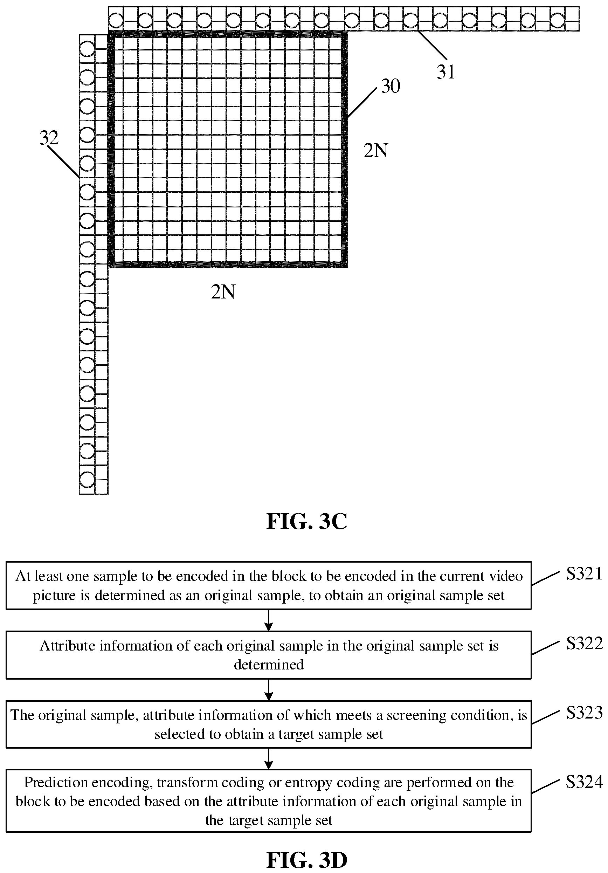

It should be understood that at least one reconstructed sample outside the block to be encoded is determined as the original samples in the original sample set. Generally, the reconstructed samples outside the block to be encoded are referred to as reference samples. This is because when predicting is performed on the block to be encoded, reference is made to the attribute information (such as a luma component, a chrominance component or the like) of these reconstructed samples, to predict the samples to be predicted in the block to be encoded. Therefore, the reconstructed samples are samples on which predicting has been performed. For example, as shown in FIG. 3C, the original sample set may include all reconstructed samples in an upper row area 31 of the block 30 to be encoded, or the original sample set may also include all reconstructed samples in a left column area 32 of the block 30 to be encoded. Generally, the original sample set includes sample identities such as sample numbers of the reconstructed samples.

In operation S312, attribute information of each reconstructed sample in the original sample set is determined.

For example, attribute information such as position information, a luma component, and a chrominance component of each reconstructed sample in the original sample set may be obtained based on video data of the current video picture.

In operation S313, the reconstructed sample, attribute information of which meets a screening condition, is selected to obtain a target sample set.

Generally, the screening condition is used to screen out a reconstructed sample which is strongly related to the block to be encoded, so as to obtain a target sample set. It should be noted that the target sample set includes attribute information of reconstructed samples.

In operation S314, prediction encoding is performed on the block to be encoded based on the attribute information of each reconstructed sample in the target sample set.

It should be understood that the prediction encoding is a processing step in the encoding process, which includes predicting currently-encoded samples based on transmitted samples by utilizing spatial or temporal correlation of neighbouring samples, and then encoding and transmitting a difference (i.e., a prediction error) between a predicted value and a true value. For example, in prediction encoding, down-sampling, filtering processing or the like is performed on the target sample set using the attribute information of each reconstructed sample in the target sample set. For another example, a prediction model of the block to be encoded is determined by using the attribute information of each reconstructed sample in the target sample set.

In other embodiments, transform encoding, entropy encoding or the like may be performed on the block to be encoded based on the attribute information of each reconstructed sample in the target sample set.

It should be understood that the transform encoding is another processing operation in the encoding process, which mainly includes transforming an image described in the spatial domain into data (coefficient) in a transform domain through some transform (such as discrete cosine transform, discrete sine transform, Hadamard transform or the like), thereby achieving the purpose of changing a data distribution and reducing the amount of effective data. For example, in transform encoding, information of a transform encoding mode is derived using attribute information of each reconstructed sample in the target sample set.

Prediction encoding and transform encoding are two different types of compression encoding methods. If the two methods are combined, hybrid encoding is formed. In the framework of hybrid encoding, entropy encoding is a processing step subsequent to prediction encoding and transform encoding, and is a Variable Length Coding (VLC), which can further improve compression efficiency of hybrid encoding. In entropy encoding, information of a context model of the entropy encoding may be derived using the attribute information of each reconstructed sample in the target sample set.

In the embodiments of the present disclosure, the reconstructed sample, attribute information of which meets a screening condition, is selected from the original sample set of the block to be encoded, to obtain a target sample set. The prediction encoding, transform encoding or entropy encoding is performed on the block to be encoded based on the attribute information of each reconstructed sample in the target sample set. In this way, any one of the above encoding processing is performed on the block to be encoded based on the attribute information of the selected part of the original samples (rather than all the original samples in the original sample set), which can reduce computational complexity of encoding processing, thereby improving video encoding efficiency, and improving fluidity of video viewing of the users.

The embodiment of the present disclosure provides another method for processing information. FIG. 3D is a schematic diagram of an implementation flow of another method for processing information according to an embodiment of the present disclosure. As shown in FIG. 3D, the method includes operations S321 to S324.

In operation S321, at least one sample to be encoded of a block to be encoded in a current video picture is determined as an original sample to obtain an original sample set.

It should be noted that, pieces of attribute information of the samples to be encoded in the block to be encoded are different in different stages of the encoding processing. For example, in a case that prediction encoding is performed at operations S321 to S324, the attribute information of the sample to be encoded includes a luma component, a chrominance component, position information and the like here. For another example, in a case that transform encoding is performed at operations S321 to S324, the attribute information of the sample to be encoded includes a residual value and position information or the like that are outputted after prediction encoding, that is, the block to be encoded is a residual block. For another example, in a case that entropy encoding is performed at operations S321 to S324, the attribute information of the sample to be encoded here includes a transform coefficient and position information or the like that are outputted after transform encoding, that is, the block to be encoded is a coefficient block.

In operation S322, attribute information of each original sample in the original sample set is determined.

In operation S323, the original sample, attribute information of which meets a screening condition, is selected to obtain a target sample set.

For example, in transform encoding, a part of samples to be encoded may be sampled from the residual block based on the position information of each sample to be encoded in the residual block, and the sampled part of the samples to be encoded may be determined as the target sample set. For another example, in transform encoding, samples to be encoded having a residual value greater than a pre-set threshold are selected from the residual block to obtain a target sample set. For another example, in entropy encoding, a part of the samples to be encoded may be sampled from the coefficient block based on the position information of each sample to be encoded in the coefficient block, and the sampled part of the samples to be encoded are determined as the target sample set.

In operation S324, prediction encoding, transform encoding or entropy encoding is performed on the block to be encoded based on the attribute information of each original sample in the target sample set.

In the embodiment of the present disclosure, encoding processing such as prediction encoding, transform encoding or entropy encoding or the like is performed on only a part of the samples to be encoded in the block to be encoded, rather than all the samples to be encoded in the block to be encoded, which can effectively reduce complexity of encoding processing and improves a speed of data processing, thereby improving encoding efficiency, and further improving fluidity of video viewing of the users.

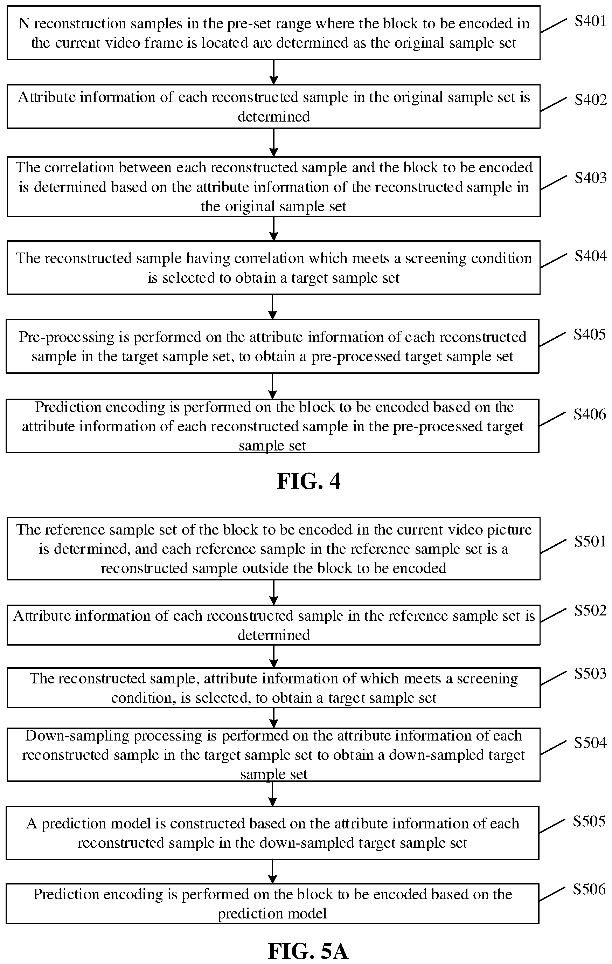

The embodiment of the present disclosure provides another method for processing information. FIG. 4 is a schematic diagram of an implementation flow of another method for processing information according to the embodiments of the present disclosure. As shown in FIG. 4, the method includes operations S401 to S406.

In operation S401, N reconstructed samples in a pre-set range where the block to be encoded in a current video picture is located are determined as the original sample set, and N is a pre-set integer greater than or equal to 1.

For example, reconstructed samples in a reference row or a reference column adjacent to the block to be encoded are determined as the original sample set. The number of the reference rows and the reference columns is not limited here, and may be one or more reference rows, or may be one or more reference columns. As shown in FIG. 3C, the reconstructed samples in the upper row area 31 of the block 30 to be encoded may be determined as the original sample set. Alternatively, the reconstructed samples in the left column area 32 of the block 30 to be encoded may also be determined as the original sample set. It should be noted that the value of N may be pre-set. For example, N is equal to the sum of side length of the block to be encoded and n, and n is an integer greater than or equal to 0, and a side length of the block to be encoded can be characterized by the number of samples.

It should also be noted that operation S401 is actually an implementation example of operation S301 in the above embodiment.

In operation S402, attribute information of each reconstructed sample in the original sample set is determined.

In operation S403, correlation between each reconstructed sample and the block to be encoded is determined based on the attribute information of the reconstructed sample in the original sample set.

It should be understood that the correlation is used to characterize a degree of correlation between the reconstructed sample and the block to be encoded (or the samples to be predicted in the block to be encoded). For example, a position relationship between the reconstructed sample in the original sample set and the block to be encoded may be determined, and the position relationship may be determined as the correlation between the reconstructed sample and the block to be encoded. In other embodiments, a reconstructed sample having a color component which is within a pre-set range is selected from the original sample set, as the target sample, to obtain the target sample set. The color component is a luma component or a chrominance component. For example, the pre-set range is $(x_{min}, x_{max})$, where $x_{min}$ and $x_{max}$ respectively indicate a maximum value and a minimum value of the color component in the original sample set. With the correlation between the reconstructed sample and the block to be encoded increases, similarity between the attribute information of the reconstructed sample and the attribute information of the samples to be predicted in the block to be encoded increases. Therefore, based on the correlation between the reconstructed sample and the block to be encoded, reliable reconstructed samples can be quickly and effectively selected as the reconstructed samples in the target sample set. In addition, when reconstructed samples which meet the screening condition are selected based on the correlation, because some reconstructed samples having lower correlation are screened off, the reconstructed samples in the obtained target sample set are samples which are strongly correlated to the block to be encoded. In this way, when prediction encoding is performed on the block to be encoded based on the attribute information of each reconstructed sample in the target sample set, robustness of the algorithm is improved.

In operation S404: the reconstructed sample having correlation which meets the screening condition is selected to obtain a target sample set.

For example, assumed that a distance between the reconstructed sample and the block to be encoded is used to characterize the correlation between the reconstructed sample and the block to be encoded. The reconstructed sample, a distance of which is greater than or equal to a pre-set distance threshold, may be selected as a reconstructed sample in the target sample set. It should be noted that operation S403 and operation S404 are actually an embodiment example of operation S303 in the above embodiment.

In operation S405, the attribute information of each reconstructed sample in the target sample set is pre-processed, to obtain a pre-processed target sample set.

It should be understood that before prediction encoding is performed on the block to be encoded, if only a part (that is, reconstructed samples in the target sample set) of the reference samples are pre-processed, and prediction encoding is performed on the block to be encoded based on a pre-processed result, which can reduce complexity of pre-processing, and reduces computational complexity of prediction encoding, and improving the fluidity of video.

For example, the pre-processing may be down-sampling processing, that is, down-sampling processing is performed on the attribute information of each reconstructed sample in only the target sample set, rather than down-sampling processing is performed on the original sample set. It should be understood that the purpose of down-sampling is to unify resolution between the multiple color components of the reconstructed sample, that is, to make the multiple color components of the reconstructed sample have the same size in the spatial domain. Therefore, down-sampling is performed on only the part of the reconstructed samples here, which can reduce the number of down-sampling process, thereby improving the encoding efficiency of prediction encoding.

Alternatively, the pre-processing may also be filtering processing (for example, interpolation filtering), that is, filtering processing is performed on the attribute information of each reconstructed sample in the target sample set, to obtain a filtered target sample set. Similarly, instead of performing filtering processing on the original sample set, filtering processing is performed on the attribute information of each reconstructed sample in only the target sample set, rather than all the reconstructed samples in the original sample set, which can reduce the number of filtering and improve a speed of the filtering process.

In operation S406, prediction encoding is performed on the block to be encoded based on the attribute information of each reconstructed sample in the pre-processed target sample set.

It should be noted that operation S405 and operation S406 are actually an implementation example of operation S304 in the above embodiment.

The embodiment of the present disclosure provides another method for processing information. FIG. 5A is a schematic diagram of an implementation flow of another method for processing information according to an embodiment of the present disclosure. As shown in FIG. 5A, the method includes operations S501 to S506.

In operation S501, an original sample set of a block to be encoded in the current video picture is determined, and each reference sample in the original sample set is a reconstructed sample outside the block to be encoded.

In operation S502, attribute information of each reconstructed sample in the original sample set is determined.

In operation S503, the reconstructed sample, attribute information of which meets a screening condition, is selected to obtain a target sample set.

In operation S504, down-sampling processing is performed on the attribute information of each reconstructed sample in the target sample set, to obtain a down-sampled target sample set.

In operation S505, a prediction model is constructed based on the attribute information of each reconstructed sample in the down-sampled target sample set. The prediction model is used to characterize a prediction relationship between the multiple color components of the sample to be encoded in the block to be encoded.

It should be noted that the prediction model may be a linear model or a nonlinear model. A structure of the prediction model is not limited in the embodiments of the present disclosure. A prediction model can be fitted based on the attribute information of all the reconstructed samples in the down-sampled target sample set, which makes the multiple color components of the sample to be encoded in the block to be encoded conform to a prediction relationship characterized in the prediction model.

For example, it is assumed that the prediction model is expressed as formula (1):

$$C' = \alpha * Y + \beta \tag{1}$$

In the formula, $\alpha$ and $\beta$ indicate model parameters of the prediction model, Y indicates a luma component, and C' indicates a predicted chrominance component. Based on luma components and chrominance components of multiple reconstructed samples in the down-sampled target sample set, values of the model parameters $\alpha$ and $\beta$ can be quickly derived to obtain the prediction model. The obtained prediction model is used to predict a chrominance component of the sample to be predicted in the block to be encoded. For example, a maximum value and a minimum value of the chrominance component are found from the down-sampled target sample set, and, the values of the model parameters $\alpha$ and $\beta$ are determined based on the maximum value and minimum value of the chrominance component, In this way, compared with determining the model parameters $\alpha$ and $\beta$ based on the original sample set, the determining the model parameters a and $\beta$ based on the down-sampled target sample set can obtain the model parameter values of the prediction model more efficiently, thereby improving the data processing speed. In addition, the method for processing information provided by the embodiment of the present disclosure is beneficial for the improvement of encoding efficiency. Especially when the screening condition is reasonable, the improvement of encoding efficiency is more obvious.

In other embodiments, operations S504 and S505 may also be replaced by the following operations. Filtering processing is performed on the attribute information of each reconstructed sample in the target sample set, to obtain a filtered target sample set. A prediction model is constructed based on the filtered target sample set and the prediction model is used to characterize a prediction relationship between multiple color components of the sample to be encoded in the block to be encoded. Operation S505 and operation S506 are actually an embodiment example of operation S406 in the above embodiment.

In operation S506, prediction encoding is performed on the block to be encoded based on the prediction model.

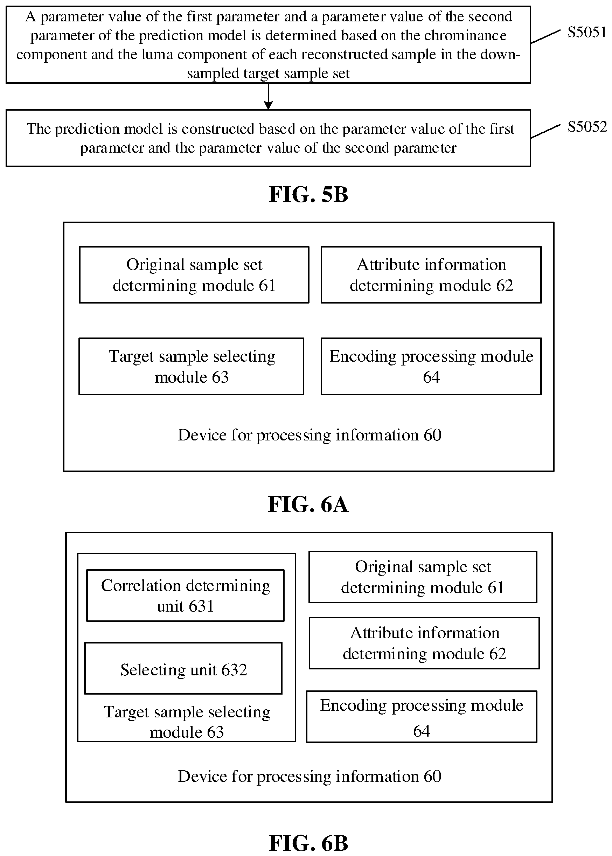

In other embodiments, operation S505 that the prediction model is constructed based on the down-sampled target sample set and the prediction model is used to characterize the prediction relationship between the multiple color components of the sample to be encoded in the block to be encode, as shown in FIG. 5B, can be implemented through the following operations S5051 and S5052.

In operation S5051, a parameter value of the first parameter and a parameter value of the second parameter of the prediction model are determined based on the chrominance component and the luma component of each reconstructed sample in the down-sampled target sample set.

In practical, in other embodiments, the parameter value of the first parameter and the parameter value of the second parameter of the prediction model may also be determined based on the chrominance component and the luma component of each reconstructed sample in the filtered target sample set. Compared with determining the parameter value of the first parameter and the parameter value of the second parameter based on the filtered original sample set, the determining the parameter value of the first parameter and the parameter value of the second parameter based on the filtered target sample set has a lower calculation complexity.

In operation S5052, the prediction model is constructed based on the parameter value of the first parameter and the parameter value of the second parameter.

In the embodiment of the present disclosure, a concept of a reference sample subset (that is, the target sample set described in the above embodiment) is proposed. In prediction encoding, reference samples are often used to predict the current encoding block (that is, the block to be encoded described in operation S311). It is assumed that reference points in certain area of the reference samples are more effective for prediction of the current encoding block, the reference sample subset constituted by the points are used to predict the current encoding block, thereby reducing complexity while not losing or even improving encoding performance. Therefore, in the embodiment of the present disclosure, prior to any processing (such as down-sampling and filtering, etc.) before the current encoding block is predicted, reference sample samples are selected appropriately to obtain a reference sample subset. Prediction encoding is performed based on the subset, thereby improving the encoding efficiency of prediction encoding.

In prediction encoding, reference samples are often used to predict the current block to be encoded. For example, available reference samples in the upper and left areas of the current block to be encoded are used to predict the current block to be encoded. The reference samples are usually composed of one or more columns of samples on the left side of the current block to be encoded and one or more rows of samples on the upper side of the current block to be encoded. These samples are generally reconstructed samples, that is, samples on which prediction encoding is completed. In some cases, down-sampling processing is performed on the samples to compose reference samples.

For example, as shown in FIG. 3C, the current block to be encoded is a 2N*2N encoding block, and the original sample set of the current block to be encoded includes 2N reconstructed samples adjacent to the upper side and 2N reconstructed samples adjacent to the left side.

The importance and correlation of the reference samples are different for an encoding block. Also, the reference samples that are close to the current block to be encoded may have similar effects on the prediction of the current block to be encoded. That is, some samples in the vicinity of the current block to be encoded may be very effective in prediction, while other samples are not beneficial to the prediction of the current block to be encoded. Only the selected important reference samples are used as the reference sample subset (that is, the target sample set), and the reference sample subset is used to predict the current block to be encoded. Therefore, a good prediction result having lower computational complexity can be obtained. In the embodiment of the present disclosure, when screening out reference samples, a reference sample subset is constructed according to factors such as the importance and relevance of each reference sample, and the reference sample subset is used to predict the current block to be encoded, thereby reducing calculation complexity while improving encoding performance.

For example, the original neighbouring reference samples (that is, reference samples in the original sample set) are obtained from the left or top area of the current block to be encoded. The eligible samples which meet a condition are selected from multiple original neighbouring reference samples, to obtain a reference sample subset. After the reference sample subset is obtained, the subset can be used in any process before prediction is performed on the current block to be encoded. For example, down-sampling or filtering is performed on the subset. For another example, the subset is used in the cross-component linear model (CCLM) prediction method. It should be understood that the cross-component linear model (CCLM) is an encoding tool in H.266/VVC. The model uses the reconstructed luma (Y) to predict the corresponding chrominance (C). For example, the chrominance value C' of the current block to be encoded can be derived through the following linear model formula (2).

$$C' = \alpha * Y + \beta \qquad (2)$$

Here, the values of the parameters $\alpha$ and $\beta$ can be derived from the luma and chromaticity of neighbouring reference samples.

In CCLM, some points in the original reference area can be selected. Then the reference sample subset composed of these points is used for further processing. For example, down-sampling processing is performed on the reference sample subset, and the maximum value and the minimum value are found from the down-sampled reference sample subset, the values of the parameters $\alpha$ and $\beta$ are determined based on the maximum value and the minimum values. In this way, down-sampling is performed on the reference sample subset, which can reduce the number of down-sampling compared with performing down-sampling processing on the original sample set. Further, the maximum value and the minimum value can be found more quickly from the down-sampled reference sample subset, and the prediction model is quickly determined, thereby improving the data processing speed. In practice, if the screening condition is reasonable, the encoding efficiency of prediction encoding is improved. In other embodiments, compared to the original sample set, the reference sample subset used here can derive the values of the parameters $\alpha$ and $\beta$ more quickly. Then, the current block to be encoded is predicted through the prediction model obtained by the process, thereby improving the data processing speed.

In the embodiment of the present disclosure, in any process before performing prediction on the current encoding block, a reference sample subset is used for video encoding, which can reduce complexity of video encoding and improve the robustness of the algorithm.

Based on the foregoing embodiments, the embodiment of the present disclosure provides a device for processing information, which includes all units and all modules included in each unit, and can be implemented by a processor in an electronic device, and can also be implemented by specific logic circuits. In the implementation process, the processor can be a central processing unit (CPU), a microprocessor (MPU), a digital signal processor (DSP) or a field programmable gate array (FPGA) and the like.

FIG. 6A is a schematic diagram of a composition structure of a device for processing information according to an embodiment of the disclosure. As shown in FIG. 6A, the device 6 includes an original sample set determining module 61, an attribute information determining module 62, a target sample selecting module 63, and an encoding processing module 64. The original sample set determining module 61 is configured to determine an original sample set of a block to be encoded in a current video picture. The attribute information determining module 62 is configured to determine attribute information of each original sample in the original sample set. The target sample selecting module 63 is configured to select the original sample, attribute information of which meets a screening condition, to obtain a target sample set. The encoding processing module 64 is configured to perform encoding processing on the block to be encoded based on the attribute information of each original sample in the target sample set.

In other embodiments, the original sample set determining module 61 is configured to determine at least one reconstructed sample outside the block to be encoded as an original sample in the original sample set. The encoding processing module 64 is configured to perform prediction encoding, transform encoding or entropy encoding on the block to be encoded based on the attribute information of each reconstructed sample in the target sample set.

In other embodiments, the original sample set determining module 61 is configured to determine at least one sample to be encoded in the block to be encoded as an original sample in the original sample set. The encoding processing module 64 is configured to perform prediction encoding, transform encoding or entropy encoding on the target sample set based on the attribute information of each sample to be encoded in the target sample set.

In other embodiments, as shown in FIG. 6B, the target sample selecting module 63 includes a correlation determining unit 631 and a selecting unit 632. The correlation determining unit is configured to determine correlation between each reconstructed sample and the block to be encoded based on the attribute information of the reconstructed samples in the original sample set. The selecting unit 632 is configured to select a reconstructed sample having correlation which meets a screening condition, to obtain a target sample set.

In other embodiments, the correlation determining unit 631 is configured to determine a position relationship between the reconstructed sample in the original sample set and the block to be encoded. The position relationship is determined as the correlation between the reconstructed sample and the block to be encoded.

In other embodiments, the target sample selecting module 63 is configured to select a reconstructed sample having a color component which is within a pre-set range from the original sample set as target samples, to obtain the target sample set.

In other embodiments, the color component is a luma component or a chrominance component.

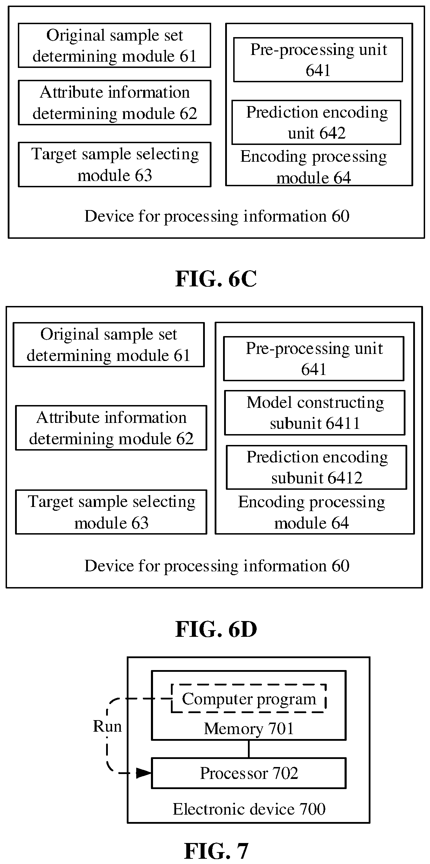

In other embodiments, as shown in FIG. 6C, the encoding processing module 64 includes a pre-processing unit 641, configured to perform pre-processing on the attribute information of each reconstructed sample in the target sample set to obtain the pre-processed target sample set. The prediction encoding unit 642 is configured to perform prediction encoding on the block to be encoded based on the attribute information of each reconstructed sample in the pre-processed target sample set.

In other embodiments, the pre-processing unit 641 is configured to perform down-sampling processing on the attribute information of each reconstructed sample in the target sample set, to obtain a down-sampled target sample set. Alternatively, the pre-processing unit 641 is configured to perform filtering processing on the attribute information of each reconstructed sample in the target sample set, to obtain a filtered target sample set.

In other embodiments, as shown in FIG. 6D, the prediction encoding unit 641 includes a model constructing subunit 6411 and a prediction encoding subunit 6412. The model constructing subunit is configured to construct a prediction model based on the attribute information of each reconstructed sample in the down-sampled target sample set or the filtered target sample set. The prediction model is used to characterize a prediction relationship between multiple color components of the sample to be encoded in the block to be encoded. The prediction encoding subunit 6412 is configured to perform prediction encoding on the block to be encoded based on the prediction model.

In other embodiments, the model construction subunit 6411 is configured to determine a parameter value of a first parameter and a parameter value of a second parameter of the prediction model based on the chrominance component and the luma component of each reconstructed sample in the down-sampled target sample set or the filtered target sample set, and construct the prediction model based on the parameter value of the first parameter and the parameter value of the second parameter.

In other embodiments, the original sample set determining module 61 is configured to determine N reconstructed samples within a pre-set range where the block to be encoded is located as the original sample set, where N is a pre-set integer greater than equal to 1.

In other embodiments, the original sample set determining module 61 is configured to determine reconstructed samples in a reference row or reference column adjacent to the block to be encoded as the original sample set.

The description of the above device embodiment is similar to the description of the above method embodiment, and has similar beneficial effects as the method embodiment. For technical details which are not disclosed in the device embodiments of the disclosure, reference is made to the description of the method embodiments of the disclosure for understanding.

It should be noted that in the embodiments of the present disclosure, if the foregoing method for processing information is implemented in the form of a software function module and sold or used as an independent product, the software function module can also be stored in a computer readable storage medium. Based on such understanding, an essential part of the technical solutions of the embodiments of the present disclosure or a part of the technical solutions which contributes to related technologies can be implemented in the form of a software product. The computer software product is stored in a storage medium and includes several instructions to enable the electronic device (which may be a mobile phone, a tablet, a personal computer, a personal digital assistant, a navigator, a digital phone, a video phone, a television, a sensor device, a server, etc.) to execute all or part of the methods described in the various embodiments of the present disclosure. The foregoing storage media include a U disk, a mobile hard disk, a Read Only Memory (ROM), a magnetic disk or an optical disk and other mediums that can store program codes. In this way, the embodiments of the present disclosure are not limited to any specific hardware and software combination.

An embodiment of the present disclosure provides an electronic device, including a memory and a processor. The memory stores a computer program that can run on the processor, and the processor implements the operations in the method for processing information provided in the above embodiment when the processor executes the program.

The embodiment of the present disclosure provides a computer-readable storage medium on which a computer program is stored, characterized in that, the computer program, when executed by a processor, implements the operations in the method for processing information provided in the above embodiments.

It should be pointed out here that the descriptions of the foregoing storage medium and device embodiments are similar to the foregoing description of the method embodiment, and have similar beneficial effects as the method embodiment. For technical details that are not disclosed in the storage medium and device embodiments of this disclosure, reference is made to the description of the method embodiments of the disclosure for understanding.

It should be noted that FIG. 7 is a schematic diagram of the hardware entity of the electronic device according to embodiments of the disclosure. As shown in FIG. 7, the electronic device 700 includes a memory 701 and a processor 702, and the memory 701 stores a computer program that can run on the processor 702. The processor 702, when executing the program, implements the operations in the method for processing information provided in the foregoing embodiments.

It should be noted that the memory 701 is configured to store instructions and applications executable by the processor 702, and may also cache data (for example, image data, audio data, voice communication data and video communication data) which is to be processed or processed by the processor 702 and each module in the electronic device 700, and can be implemented through FLASH or random access memory (RAM).

It should be understood that "one embodiment" or "an embodiment" mentioned throughout the description means that a specific feature, structure, or characteristic related to the embodiment is included in at least one embodiment of the present disclosure. Therefore, the "in one embodiment" or "in an embodiment" in various places throughout the description do not necessarily refer to the same embodiment. In addition, these specific features, structures, or characteristics can be combined in one or more embodiments in any suitable manner. It should be understood that, in the various embodiments of the present disclosure, the sequence number of the foregoing processes does not mean an execution order, and the execution order of each process should be determined by its function and internal logic and not constitute any limitation to the implementation process of the embodiments of the present disclosure. The numbers of the above embodiments of the present disclosure are only for description, and do not represent the advantages and disadvantages of the embodiments.

It should be noted that in the description, the terms "include", "comprise" or any other variants thereof are intended to cover non-exclusive inclusion, so that a process, method, object or device including a series of elements not only includes those elements, but also includes other elements not explicitly listed, or inherent elements to the process, method, object, or device. If there are no more restrictions, the elements defined by the sentence "including a..." do not exclude the existence of other identical elements in the process, method, object or device that includes the element.

In the several embodiments provided in the disclosure, it should be understood that the disclosed device and method may be implemented in other ways. The device embodiments described above are merely illustrative. For example, the division of the units is only a logical function division, and there may be other divisions in actual implementation. For example, multiple units or components may be combined, or may be integrated into another system, or some features may be ignored or not be implemented. In addition, the coupling, or direct coupling or communication connection between the components shown or discussed may be indirect coupling or communication connection through some interfaces, devices or units, and may be electrical, mechanical or other forms.

The units described above as separate components may or may not be physically separate, and the components displayed as units may or may not be physical units. The units may be located in the same place or distributed on multiple network units. A part or all of the units may be selected according to actual needs to achieve the purpose of the solution of the embodiment.

In addition, the functional units in the embodiments of the present disclosure may be all integrated into one processing unit, or each unit may be individually used as a unit, or two or more units can be integrated into one unit. The integrated unit may be implemented in the form of hardware, or in the form of hardware and software functional units.

An ordinary skilled person in the art can understand that all or a part of the operations in the foregoing method embodiments may be implemented by a program instructing relevant hardware. The foregoing program may be stored in a computer readable storage medium. When the program is executed, the operations of the foregoing method embodiment are executed. The above storage medium includes various media that can store program codes, such as a mobile storage device, a Read Only Memory (ROM), a magnetic disk, or an optical disk, and the like.

Alternatively, if the above integrated unit of the disclosure is implemented in the form of a software function module and sold or used as an independent product, the integrated unit may also be stored in a computer readable storage medium. Based on such understanding, the essential part of the technical solutions of the embodiments of the present disclosure or a part of the technical solutions that contributes to related technologies can be implemented in the form of a software product. The computer software product is stored in a storage medium and includes several instructions to enable the electronic device (which may be a mobile phone, a tablet, a personal computer, a personal digital assistant, a navigator, a digital phone, a video phone, a television, a sensor device, a server, etc.) to execute all or a part of the methods described in the various embodiments of the present disclosure. The forgoing storage media includes various mediums that can store program codes, such as a mobile storage device, an ROM, a magnetic disk, or an optical disk, and the like.

The foregoing is only the embodiments of the present disclosure, but the protection scope of the present disclosure is not limited thereto. Variation and substitution which can be readily thought by those skilled in the art within the technical scope disclosed in the present disclosure should fall within the protection scope of the present disclosure. Therefore, the protection scope of this disclosure should be subject to the protection scope of the claims.

INDUSTRIAL APPLICABILITY

In the embodiments of the present disclosure, the original sample, attribute information of which meets the screening condition, is selected from the original sample set of the block to be encoded, to obtain a target sample set. The encoding processing is performed on the block to be encoded based on the attribute information of each original sample in the target sample set. In this way, encoding processing is performed on the block to be encoded based on the attribute information of the selected part of the original samples, which can reduce the computational complexity of encoding process, thereby improving video encoding efficiency, and improving fluidity of video viewing of the users.

**Claims**

1. A method for processing information, comprising:

   determining an original sample set of a block to be encoded in a current video picture;
   determining attribute information of each original sample in the original sample set;
   selecting the original sample, attribute information of which meets a screening condition, to obtain a target sample set; and
   preforming encoding processing on the block to be encoded based on the attribute information of each original sample in the target sample set.

2. The method according to claim 1, wherein determining the original sample set of the block to be encoded in the current video picture comprises:

determining at least one reconstructed sample outside the block to be encoded as an original sample in the original sample set, and

wherein preforming encoding processing on the block to be encoded based on the attribute information of each original sample in the target sample set comprises:

performing prediction encoding, transform encoding or entropy encoding on the block to be encoded based on attribute information of each reconstructed sample in the target sample set.

3. The method according to claim 1, wherein determining the original sample set of the block to be encoded in the current video picture comprises:

determining at least one sample to be encoded in the block to be encoded as an original sample in the original sample set, and

wherein preforming encoding processing on the block to be encoded based on the attribute information of each original sample in the target sample set comprises:

performing prediction encoding, transform encoding or entropy encoding on the target sample set based on attribute information of each sample to be encoded in the target sample set.

4. The method according to claim 2, wherein selecting the original sample, the attribute information of which meets the screening condition, to obtain the target sample set comprises:

determining correlation between each reconstructed sample and the block to be encoded based on the attribute information of the reconstructed sample in the original sample set; and

selecting the reconstructed sample having the correlation which meets the screening condition, to obtain the target sample set.

5. The method according to claim 4, wherein determining the correlation between each reconstructed sample and the block to be encoded based on the attribute information of the reconstructed sample in the original sample set comprises:

determining a position relationship between the reconstructed sample in the original sample set and the block to be encoded; and

determining the position relationship as the correlation between the reconstructed sample and the block to be encoded.

6. The method according to claim 2, wherein selecting the original sample, the attribute information of which meets the screening condition, to obtain the target sample set comprises:
selecting, from the original sample set, the reconstructed sample having a color component which is within a pre-set range as a target sample, to obtain the target sample set.

7. The method according to claim 6, wherein the color component is a luma component or a chrominance component.

8. The method according to claim 2, wherein performing prediction encoding on the block to be encoded based on the attribute information of each reconstructed sample in the target sample set comprises:

performing pre-processing on the attribute information of each reconstructed sample in the target sample set, to obtain a pre-processed target sample set; and

performing prediction encoding on the block to be encoded based on attribute information of each reconstructed sample in the pre-processed target sample set.

9. The method according to claim 8, wherein performing pre-processing on the attribute information of each reconstructed sample in the target sample set to obtain the pre-processed target sample set comprises:

performing down-sampling processing on the attribute information of each reconstructed sample in the target sample set, to obtain a down-sampled target sample set; or

performing filtering processing on the attribute information of each reconstructed sample in the target sample set, to obtain a filtered target sample set.

10. The method according to claim 9, wherein performing prediction encoding on the block to be encoded based on the attribute information of each reconstructed sample in the pre-processed target sample set comprises:

constructing a prediction model based on attribute information of each reconstructed sample in the down-sampled target sample set or the filtered target sample set, wherein the prediction model is used to characterize a prediction relationship between a plurality of color components of the sample to be encoded in the block to be encoded; and
performing prediction encoding on the block to be encoded based on the prediction model.

11. The method according to claim 10, wherein constructing the prediction model based on the attribute information of each reconstructed sample in the down-sampled target sample set or the filtered target sample set comprises:

determining a parameter value of a first parameter and a parameter value of a second parameter of the prediction model based on a chrominance component and a luma component of each reconstructed sample in the down-sampled target sample set or the filtered target sample set; and
constructing the prediction model based on the parameter value of the first parameter and the parameter value of the second parameter.

12. A device for processing information, comprising:

an original sample set determining module configured to determine an original sample set of a block to be encoded in a current video picture;
an attribute information determining module configured to determine attribute information of each original sample in the original sample set;
a target sample selecting module configured to select the original sample, attribute information of which meets a screening condition, to obtain a target sample set; and
an encoding processing module configured to perform encoding processing on the block to be encoded based on the attribute information of each original sample in the target sample set.

13. The device according to claim 12, wherein the target sample selecting module comprises:

a correlation determining unit configured to determine correlation between each reconstructed sample and the block to be encoded based on attribute information of the reconstructed sample in the original sample set; and
an selecting unit configured to select the reconstructed sample having the correlation which meets the screening condition to obtain the target sample set.

14. The device according to claim 12, wherein the encoding processing module comprises:

a pre-processing unit configured to perform pre-processing on attribute information of each reconstructed sample in the target sample set, to obtain a pre-processed target sample set; and
a prediction encoding unit configured to perform prediction encoding on the block to be encoded based on attribute information of each reconstructed sample in the pre-processed target sample set.

15. The device according to claim 14, wherein the pre-processing unit is configured to:

perform down-sampling processing on the attribute information of each reconstructed sample in the target sample set, to obtain a down-sampled target sample set; or
perform filtering processing on the attribute information of each reconstructed sample in the target sample set, to obtain a filtered target sample set.

16. The device according to claim 15, wherein the prediction encoding unit comprises:

a model constructing subunit configured to construct a prediction model based on attribute information of each reconstructed sample in the down-sampled target sample set or the filtered target sample set, wherein the prediction model is used to characterize a prediction relationship between a plurality of color components of the sample to be encoded in the block to be encoded; and
a prediction encoding subunit configured to perform prediction encoding on the block to be encoded based on the prediction model.

**17.** The device according to claim 16, wherein model constructing subunit is configured to:

determine a parameter value of a first parameter and a parameter value of a second parameter of the prediction model based on a chrominance component and a luma component of each reconstructed sample in the down-sampled target sample set or the filtered target sample set; and
construct the prediction model based on the parameter value of the first parameter and the parameter value of the second parameter.

**18.** The device according to claim 12, wherein the original sample set determining module is configured to:
determine N reconstructed samples in a pre-set range where the block to be encoded is located as the original sample set, wherein N is a pre-set integer greater than or equal to 1.

**19.** An electronic device comprising a memory and a processor, wherein the memory stores a computer program capable of being run on the processor, and the processor, when executing the program, implements the operations in the method for processing information according to any one of claims 1 to 11.

**20.** A computer-readable storage medium having a computer program stored thereon, which, when executed by a processor, implements the operations in the method for processing information according to any one of claims 1 to 11.

**FIG. 1**

**FIG. 2A**

FIG. 2B

An original sample set of a block to be encoded in a current video picture is determined — S301

Attribute information of each sample pixel in the original sample set is determined — S302

The original sample, attribute information of which meets a screening condition, is selected to obtain a target sample set — S303

Encoding processing is performed on the block to be encoded based on the attribute information of each original sample in the target sample set — S304

FIG. 3A

An original sample set of the block to be encoded in the current video picture is determined, each original sample in the original sample set is a reconstructed sample outside the block to be encoded — S311

Attribute information of each reconstructed sample in the original sample set is determined — S312

The reconstructed sample, attribute information of which meets a screening condition, is selected, to obtain a target sample set — S313

Prediction encoding is performed on the block to be encoded based on the attribute information of each reconstructed sample in the target sample set — S314

FIG. 3B

**FIG. 3C**

| | |
|---|---|
| At least one sample to be encoded in the block to be encoded in the current video picture is determined as an original sample, to obtain an original sample set | S321 |
| Attribute information of each original sample in the original sample set is determined | S322 |
| The original sample, attribute information of which meets a screening condition, is selected to obtain a target sample set | S323 |
| Prediction encoding, transform coding or entropy coding are performed on the block to be encoded based on the attribute information of each original sample in the target sample set | S324 |

**FIG. 3D**

| N reconstruction samples in the pre-set range where the block to be encoded in the current video frame is located are determined as the original sample set | S401 |

$\downarrow$

| Attribute information of each reconstructed sample in the original sample set is determined | S402 |

$\downarrow$

| The correlation between each reconstructed sample and the block to be encoded is determined based on the attribute information of the reconstructed sample in the original sample set | S403 |

$\downarrow$

| The reconstructed sample having correlation which meets a screening condition is selected to obtain a target sample set | S404 |

$\downarrow$

| Pre-processing is performed on the attribute information of each reconstructed sample in the target sample set, to obtain a pre-processed target sample set | S405 |

$\downarrow$

| Prediction encoding is performed on the block to be encoded based on the attribute information of each reconstructed sample in the pre-processed target sample set | S406 |

**FIG. 4**

| The reference sample set of the block to be encoded in the current video picture is determined, and each reference sample in the reference sample set is a reconstructed sample outside the block to be encoded | S501 |

$\downarrow$

| Attribute information of each reconstructed sample in the reference sample set is determined | S502 |

$\downarrow$

| The reconstructed sample, attribute information of which meets a screening condition, is selected, to obtain a target sample set | S503 |

$\downarrow$

| Down-sampling processing is performed on the attribute information of each reconstructed sample in the target sample set to obtain a down-sampled target sample set | S504 |

$\downarrow$

| A prediction model is constructed based on the attribute information of each reconstructed sample in the down-sampled target sample set | S505 |

$\downarrow$

| Prediction encoding is performed on the block to be encoded based on the prediction model | S506 |

**FIG. 5A**

A parameter value of the first parameter and a parameter value of the second parameter of the prediction model is determined based on the chrominance component and the luma component of each reconstructed sample in the down-sampled target sample set — S5051

↓

The prediction model is constructed based on the parameter value of the first parameter and the parameter value of the second parameter — S5052

## FIG. 5B

| Original sample set determining module 61 | Attribute information determining module 62 |
|---|---|
| Target sample selecting module 63 | Encoding processing module 64 |

Device for processing information 60

## FIG. 6A

Correlation determining unit 631

Selecting unit 632

Target sample selecting module 63

Original sample set determining module 61

Attribute information determining module 62

Encoding processing module 64

Device for processing information 60

## FIG. 6B

| Original sample set determining module 61 | Pre-processing unit 641 |
|---|---|
| Attribute information determining module 62 | Prediction encoding unit 642 |
| Target sample selecting module 63 | Encoding processing module 64 |

Device for processing information 60

## FIG. 6C

| Original sample set determining module 61 | Pre-processing unit 641 |
|---|---|
| | Model constructing subunit 6411 |
| Attribute information determining module 62 | Prediction encoding subunit 6412 |
| Target sample selecting module 63 | Encoding processing module 64 |

Device for processing information 60

## FIG. 6D

Run

Computer program

Memory 701

Processor 702

Electronic device 700

## FIG. 7

## INTERNATIONAL SEARCH REPORT

| International application No. |
| --- |
| **PCT/CN2019/087300** |

| A. | CLASSIFICATION OF SUBJECT MATTER |
| --- | --- |

H04N 19/132(2014.01)i

According to International Patent Classification (IPC) or to both national classification and IPC

| B. | FIELDS SEARCHED |
| --- | --- |

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

VEN; CNABS; CNTXT; WOTXT; USTXT; EPTXT; CNKI: 编码, 参数, 运动矢量, 残差, 像素, 小于, 大于, 阈值, 块, 兴趣, 复杂度, 部分, 插值, encode, code, parameter, motion, vector, residual, pixel, above, more than, less than, threshold, block, interest, ROI, region of interest, complex, part, interpolation

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 102665077 A (PEKING UNIVERSITY) 12 September 2012 (2012-09-12) entire document | 1-20 |
| A | CN 102124741 A (PANASONIC CORPORATION) 13 July 2011 (2011-07-13) entire document | 1-20 |
| A | CN 101360235 A (SHANGHAI INSTITUTE OF COMPUTING TECHNOLOGY, CAS et al.) 04 February 2009 (2009-02-04) entire document | 1-20 |
| A | WO 2016200714 A2 (MICROSOFT TECHNOLOGY LICENSING, LLC) 15 December 2016 (2016-12-15) entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 September 2019** | **12 October 2019** |

| Name and mailing address of the ISA/CN | Authorized officer |
| --- | --- |
| **China National Intellectual Property Administration** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/087300**

| Patent document cited in search report | | | Publication date (day/month/year) | Patent family member(s) | | | Publication date (day/month/year) |
|---|---|---|---|---|---|---|---|
| CN | 102665077 | A | 12 September 2012 | None | | | |
| CN | 102124741 | A | 13 July 2011 | US | 2011142134 | A1 | 16 June 2011 |
| | | | | JP | 5588438 | B2 | 10 September 2014 |
| | | | | WO | 2010150486 | A1 | 29 December 2010 |
| | | | | CN | 102124741 | B | 24 September 2014 |
| | | | | US | 8902985 | B2 | 02 December 2014 |
| | | | | JP | WO2010150486 | A1 | 06 December 2012 |
| CN | 101360235 | A | 04 February 2009 | CN | 101360235 | B | 14 September 2011 |
| WO | 2016200714 | A2 | 15 December 2016 | US | 10038917 | B2 | 31 July 2018 |
| | | | | US | 2016366437 | A1 | 15 December 2016 |
| | | | | WO | 2016200714 | A3 | 26 January 2017 |

Form PCT/ISA/210 (patent family annex) (January 2015)